# FASCICULE DE BREVET EUROPEEN

(11) **EP 2 017 916 B1**
(45) Date de publication et mention de la délivrance du brevet: **06.10.2010**
(21) Numéro de dépôt: 08009763.7
(22) Date de dépôt: 29.05.2008
(51) Int. Cl.: H01M 8/04

(54) **Arrêt d'une plie à combustible alimentée en oxygène pur**
Abschalten einer mit reinem Sauerstoff gespeisten Brennstoffzelle
Shutdown of a fuel cell supplied with pure oxygen

(30) Priorité: 15.06.2007 FR 0704258
(43) Date de publication de la demande: 21.01.2009
(73) Titulaire: Société de Technologie Michelin, 63000 Clermont-Ferrand (FR); Michelin Recherche et Technique S.A., 1763 Granges-Paccot (CH)
(72) Inventeur: Paganelli, Gino, 1782 Belfaux (CH)
(74) Mandataire: Bauvir, Jacques

(56) Documents cités:
- WO-A-2005/078845
- WO-A-2005/088756
- WO-A-2006/064893
- FR-A- 2 873 498

## Description

### DOMAINE DE L'INVENTION

La présente invention se rapporte aux piles à combustibles, notamment aux applications automobiles des piles à combustible.

### ETAT DE LA TECHNIQUE

On sait que les piles à combustibles permettent la production directe d'énergie électrique par une réaction électrochimique d'oxydoréduction à partir d'hydrogène (le carburant) et d'oxygène (le comburant), sans passer par une conversion en énergie mécanique. Cette technologie semble prometteuse notamment pour des applications automobiles. Une pile à combustible comporte en général l'association en série d'éléments unitaires qui, chacun, sont constitués essentiellement d'une anode et d'une cathode séparées par une membrane polymère permettant le passage d'ions de l'anode à la cathode.

En ce qui concerne le carburant, soit on dispose d'une alimentation en hydrogène, soit on produit l'hydrogène dont on a besoin près de la pile à combustible au moyen d'un reformeur lui-même alimenté par exemple par un hydrocarbure. En ce qui concerne le comburant, soit on alimente la pile à combustible en air atmosphérique comprimé et on rejette en aval de la pile à combustible le gaz en excès dans lequel la proportion d'oxygène a diminué, soit on alimente la pile à combustible en oxygène pur. Cette dernière solution présente quelques avantages, notamment une réponse plus dynamique de la pile à une demande de courant, ce qui est intéressant en particulier pour les applications aux engins de transport comme les automobiles dont on sait qu'elles imposent des conditions de fonctionnement particulièrement intermittentes, contrairement aux applications stationnaires. Comme avantages d'une alimentation d'une pile à combustible en oxygène pur, citons encore que le rendement et la densité de puissance sont meilleurs et que l'on n'a pas de contamination par des polluants contenus dans l'air atmosphérique.

Mais dans ce cas l'arrêt de la pile n'est pas immédiat car on ne peut profiter de l'effet asphyxiant de l'azote présent dans l'air. On ne peut interrompre totalement la réaction électrochimique par simple coupure des vannes d'alimentations du carburant et du comburant. En effet, la quantité d'oxygène et d'hydrogène restant emprisonnée dans les canaux respectifs de la pile à combustible suffit à entretenir la réaction électrochimique et il y a risque que cette réaction persiste pendant plusieurs heures. Par conséquent, une tension électrique persiste aux bornes de la pile à combustible au détriment de la sécurité.
Dans le cas de pile à combustible de type PEFC (Polymer Electrolyte Fuel Cell), le maintien d'une tension sans consommation de courant externe (Open Circuit Voltage) engendre des mécanismes de dégradation rapide de la membrane.

La demande de brevet WO 2005/088756A1 décrit une procédure de détection de fuites par mesure de variation de pression pendant l'arrêt de la pile. La pression du système peut être variée au moyen d'une pompe de recyclage.

La demande de brevet WO 2005/078845A2 propose une procédure d'extinction d'une pile fonctionnant à l'hydrogène et à l'air, dite « catalyst degradation suppressing ». Afin de limiter les mécanismes de dégradation du catalyseur apparaissant à fort potentiel, la pile est arrêtée en en temps minimum en prélevant un courant important afin d'engendrer une rapide chute de tension. Pendant la procédure d'extinction, l'alimentation en air est interrompue ; l'alimentation en hydrogène est maintenue et la pression semble être contrôlée au moyen du courant. La procédure d'extinction est prévue pour éviter la sous alimentation en hydrogène. Une résistance est utilisée pour consommer le gaz résiduel. Il s'agit d'une procédure d'extinction pour une pile à combustible à air et le circuit cathodique est mis à l'atmosphère pendant l'extinction ; l'alimentation en hydrogène est maintenue pendant l'extinction.

La demande de brevet WO 2006/064893 décrit une autre procédure d'extinction d'une pile à air. L'alimentation en hydrogène est d'abord interrompue ; un courant est appliqué ; puis lorsque la pression descend légèrement sous la pression atmosphérique, l'alimentation en hydrogène est maintenue pour maintenir la pression à ce niveau. Coté cathode, l'alimentation en air est d'abord maintenue pour permettre la dilution des éventuels fuites d'hydrogène par la vanne de purge ; puis l'alimentation est interrompue jusqu'à ce que l'oxygène soit consommé. De nombreuses dispositions sont prises pour prévenir les fuites aux vannes d'hydrogène. Dans le dernier mode de réalisation présenté, un complexe calcul est proposé pour maximiser le courant d'extinction en fonction de la capacité des charges, de la concentration d'hydrogène, de la concentration d'oxygène, de la distribution des tensions. Selon un commentaire à la page 20, lignes 22 à 26, toutes précautions sont prises pour empêcher la chute de pression en dessous d'un certain seuil car selon cet enseignement cela serait préjudiciable pour la membrane échangeuse d'ions.

La demande de brevet DE 100 59 393 décrit une méthode d'extinction d'une pile à combustible alimentée en hydrogène et en oxygène purs. Cette demande de brevet décrit la séquence suivante : d'abord coupure de l'alimentation en oxygène, puis utilisation d'une charge électrique variable pour prélever un courant provoquant la poursuite de la réaction de l'hydrogène et de l'oxygène dans la pile à combustible. Ensuite, lorsque la pression d'oxygène est tombée sous un seuil prédéterminé, on inonde les circuits d'hydrogène et d'oxygène en azote jusqu'à une pression prédéterminée. Ceci provoque l'arrêt de la pile à combustible. Cependant, cette solution oblige à disposer d'une réserve d'azote. En outre, le démarrage ultérieur de la pile à combustible est inéluctablement perturbé par la présence d'azote dans les circuits de gaz.

La demande de brevet WO2006/012954 propose aussi une méthode d'extinction d'une pile à combustible alimentée en hydrogène et en oxygène purs. Contrairement à la demande de brevet DE 100 59 393, la demande de brevet WO2006/012954 propose en fin de phase d'extinction d'inonder le circuit cathodique d'air atmosphérique (et non pas de gaz neutre) ce qui permet de bénéficier de l'effet asphyxiant de l'azote de l'air sans devoir disposer d'azote pur et propose de réguler le circuit anodique de façon à amener progressivement la pression d'hydrogène à un niveau proche de la pression atmosphérique.

Si cette solution permet effectivement de parvenir, sans devoir recourir à une alimentation en azote, à un arrêt maîtrisé et rapide de la pile à combustible, la pile arrêtée se trouve dans une configuration telle qu'il subsiste de l'eau, surtout au circuit cathodique ce qui, problème bien connu des piles à combustible, la rend sensible au givrage et rend problématiques les démarrages à une température inférieure à zéro degré Celsius.

Le brevet US6068942 propose d'éteindre une pile à combustible alimentée soit en oxygène soit en air ambiant fournissant l'oxygène en interrompant d'abord l'alimentation en oxygène puis, quand la pression partielle d'oxygène est inférieure à 0,5 bar, l'alimentation en hydrogène est interrompue. Le brevet US4226919 propose un arrangement de vannes pneumatiques pour assurer : i) l'introduction de l'hydrogène avant l'oxygène en phase de démarrage, ii) l'interruption de l'oxygène avant l'hydrogène en phase d'extinction, iii) l'interruption automatique de l'alimentation en oxygène en cas de chute de pression coté hydrogène pendant le fonctionnement, et iv) l'inondation des deux circuits en hydrogène au repos.

La demande de brevet US2001/0055707 propose un système permettant de purger les circuits d'oxygène et d'hydrogène avec de l'azote pendant la phase d'extinction afin de permettre un stockage à basse température (<0°C).

L'objectif de l'invention est de parvenir, sans devoir nécessairement recourir à une alimentation en azote, à un arrêt maîtrisé et rapide de la pile à combustible, c'est à dire à un arrêt des processus électrochimiques internes de façon à ce que la tension globale aux bornes de la pile à combustible tombe effectivement à près de zéro et de façon à ce qu'il n'y ait plus aucune consommation de gaz, et de façon à ce que la pile soit dans un état qui reste propice à un démarrage ultérieur rapide même à très basse température.

### BREVE DESCRIPTION DE L'INVENTION

A l'inverse des propositions citées ci-dessus, il est proposé ici de ne pas compenser la consommation de gaz et donc de laisser les deux circuits atteindre de forts niveaux de dépression. En fait, aucun des documents connus de l'état de la technique ne propose d'exploiter la dépression apparaissant à l'extinction d'une pile à combustible mais au contraire, selon l'état de la technique, il est proposé d'empêcher le développement, ou le maintien pendant une durée significative, d'une dépression dans les circuits gaz lors de l'arrêt d'une pile à combustible.

L'invention propose une procédure d'arrêt d'un système de fourniture d'électricité comportant une pile à combustible, la pile étant alimentée en oxygène pur comme comburant et délivrant une tension électrique sur une ligne électrique de puissance, le système comportant :
- un circuit de gaz carburant côté anodes ;
- un circuit d'oxygène pur côté cathodes ;
la procédure d'arrêt comprenant les étapes suivantes :
- une étape initiale pendant laquelle l'alimentation en gaz oxygène est interrompue,
- une phase de consommation électrique pendant laquelle un courant de maintien est prélevé à la pile à combustible, jusqu'à ce que la pression dans le circuit d'oxygène atteigne la pression de vapeur d'eau.

Le courant prélevé sur la pile à combustible pendant la phase d'extinction provoque la consommation du gaz résiduel tendant à réduire considérablement la pression en dessous de la pression atmosphérique. Pour des piles à combustible d'étanchéité suffisante, on peut avantageusement atteindre dans les circuits de gaz de la pile des niveaux de pression égale à celle de la pression de vapeur d'eau, soit par exemple environ 0.2 bar (pression absolue) à 60°C et de l'ordre de 0.05 bar (pression absolue) à 30°C.

La vaporisation de l'eau présente dans les canaux de la pile intervient dès que le niveau de la dépression atteint la pression de vapeur d'eau correspondant à la température réelle du moment. Il devient aisé d'évacuer cette eau de la pile, au moyen des séparateurs d'eau déjà présents dans le système. Il convient pour cela de forcer le passage de la vapeur d'eau dans le séparateur d'eau au moyen par exemple de la pompe de recirculation déjà présente dans le système. Par conséquent la pile est préparée pour demeurer à des températures fortement négatives sans préjudice pour les électrodes et les membranes de la pile à combustible. La vaporisation de l'eau tend également à garantir une humidification homogène des membranes favorisant de bonnes performances électriques. En outre, de par l'absence de gaz neutre au terme de l'extinction, la pile à combustible est dans une configuration propice à un démarrage rapide. De plus, de par la persistance d'un minimum de gaz résiduel (hydrogène et oxygène), les mécanismes de dégradation électrochimiques sur la membrane et les électrodes sont prévenus.

En pratique, il est bien difficile d'obtenir la consommation totale des deux gaz de façon simultanée ; pile à combustible arrêtée, il restera nécessairement une certaine quantité d'oxygène coté cathode ou d'hydrogène coté anode ne pouvant plus réagir. Il est préférable de favoriser l'excès d'hydrogène (plus généralement, l'excès de gaz carburant) pour les raisons suivantes :
- l'eau à évacuer se trouve majoritairement du coté cathode, il est donc préférable de consommer tout l'oxygène afin de garantir la vaporisation de l'eau grâce à une pression minimum.
- la combinaison des trois conditions suivantes : 1-sous-alimentation ou absence d'hydrogène coté anode, 2-présence d'oxygène coté cathode et 3-maintien d'un courant, est accusée d'engendrer des mécanismes de dégradation, notamment la corrosion rapide du carbone généralement utilisé comme support pour le catalyseur.

A cette fin, on peut contrôler le processus d'extinction de la pile à combustible de deux façons : soit l'interruption de l'alimentation en gaz carburant est différée par rapport à l'interruption de l'alimentation en oxygène de manière à garantir que la consommation totale d'oxygène intervienne avant celle de gaz carburant, soit l'alimentation en oxygène pur et en gaz carburant sont interrompues simultanément et, de préférence, on procède à une purge d'une partie de l'oxygène vers l'ambiant. C'est cette dernière variante qui est décrite plus en détails ci-dessous.

Dans la suite de la description, on illustre l'invention en considérant une pile à combustible du type à électrolyte sous la forme d'une membrane polymère (c'est à dire de type PEFC pour Polymer Electrolyte Fuel Cell). Ceci constitue un mode de réalisation favorable pour les applications aux véhicules de transport, en particulier les véhicules automobiles, mais n'est nullement limitatif. Un inconvénient du fait que l'arrêt de la pile n'est pas immédiat est que le système de refroidissement de la pile à combustible devrait être maintenu actif pendant une longue durée après l'extinction du véhicule, faute de quoi il y a risque d'apparition de points chauds nuisibles à la membrane polymère. De plus, le maintien d'une tension sans consommation de courant externe (Open Circuit Voltage) engendre des mécanismes de dégradation rapide de la membrane. La procédure d'arrêt proposée par la présente invention est tout particulièrement apte à éliminer ces inconvénients pour ce type de pile à combustible.

### BREVE DESCRIPTION DES FIGURES

La suite de la description permet de bien faire comprendre tous les aspects de l'invention au moyen des dessins joints dans lesquels :
- la figure 1 est un organigramme de la procédure d'arrêt d'une pile à combustible alimentée en oxygène pur ;
- la figure 2 est un schéma d'un système de production d'énergie électrique utilisant une pile à combustible alimentée en oxygène pur ;
- la figure 3 montre plusieurs chronogrammes illustrant l'arrêt d'une pile à combustible alimentée en oxygène pur.

### DESCRIPTION DU MEILLEUR MODE DE REALISATION DE L'INVENTION

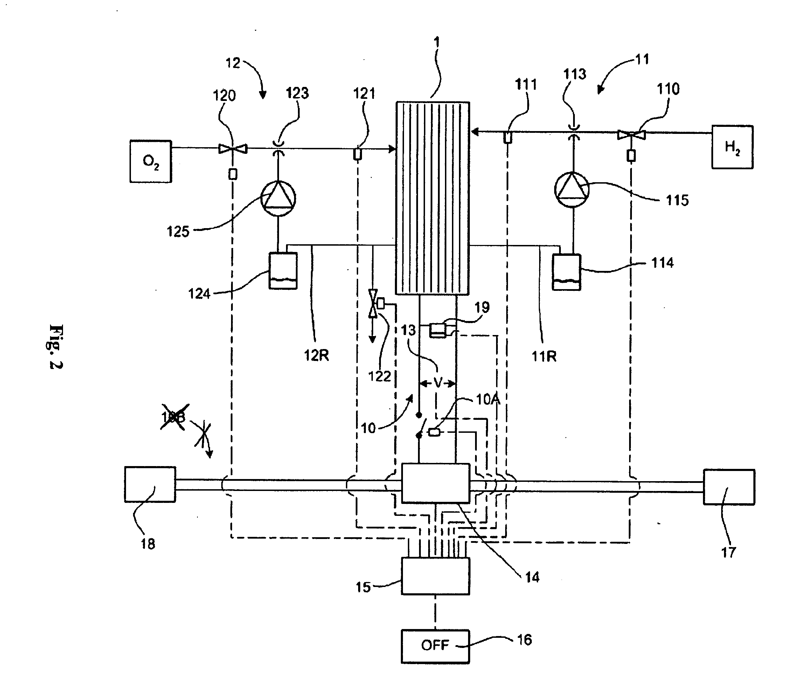

A la figure 2, on voit une pile à combustible 1 du type à électrolyte sous la forme d'une membrane polymère (c'est à dire de type PEFC pour Polymer Electrolyte Fuel Cell). La pile à combustible 1 est approvisionnée par deux gaz, à savoir le carburant (l'hydrogène stocké ou fabriqué à bord du véhicule) et le comburant (l'oxygène pur) qui alimentent les électrodes des cellules électrochimiques. Pour simplifier, la figure 2 ne représente que les éléments des circuits de gaz utiles à la compréhension de l'invention.

L'installation comporte un circuit de gaz carburant 11 coté anodes. On voit un réservoir d'hydrogène pur H₂ relié à l'entrée du circuit anodique de la pile à combustible 1 au moyen d'une canalisation d'alimentation qui passe par une vanne d'alimentation 110 en hydrogène, puis par un éjecteur 113. Une sonde de pression 111 est installée sur la canalisation juste avant l'entrée dans la pile à combustible 1. Un circuit de recyclage 11R est branché à la sortie du circuit anodique de la pile à combustible 1. L'éjecteur 113 ainsi qu'une pompe de recirculation 115 assurent le recyclage des gaz non consommés à travers un séparateur d'eau 114 et le mélange au gaz frais en provenance du réservoir.

L'installation comporte aussi un circuit de gaz comburant 12 coté cathodes. On voit un réservoir d'oxygène pur O₂ relié à l'entrée du circuit cathodique de la pile à combustible 1 au moyen d'une canalisation d'alimentation qui passe par une vanne d'alimentation 120 en oxygène, puis par un éjecteur 123. Une sonde de pression 121 est installée sur la canalisation juste avant l'entrée dans la pile à combustible 1. Un circuit de recyclage 12R est branché à la sortie du circuit cathodique de la pile à combustible 1. L'éjecteur 123 ainsi qu'une pompe de recirculation 125 assurent le recyclage des gaz non consommés à travers un séparateur d'eau 124 et le mélange au gaz frais en provenance du réservoir.

Juste à la sortie des gaz de la pile à combustible 1, on voit une vanne de purge 122 permettant de mettre à l'atmosphère le circuit d'oxygène.

La pile à combustible 1 est connectée à une ligne électrique de puissance 10 à laquelle elle délivre une tension électrique continue. On voit un interrupteur 10A permettant d'isoler la pile à combustible et une charge électrique connectée à la ligne électrique de puissance 10. La pile à combustible 1 délivre un courant électrique continu à une unité de gestion de la puissance électrique 14 (voir figure 2). Le courant électrique continu délivré par la pile à combustible est mesuré dans l'unité de gestion de la puissance électrique 14. L'unité de gestion de la puissance électrique 14 est branchée d'une part à une charge 18 formée par l'application visée, par exemple à un module de traction électrique pour véhicule automobile, constitué essentiellement d'un convertisseur DC/AC et d'une machine électrique mécaniquement accouplée à une ou aux roues motrices (non représentées) d'un véhicule automobile. L'unité de gestion de la puissance électrique 14 est également branchée à une autre charge électrique, comme par exemple à un banc de super-condensateurs 17.

Ainsi, la pile à combustible 1 peut fournir de l'électricité à l'application visée (charge 18), ou au banc de super-condensateurs 17, ou aux deux. Le banc de super-condensateurs 17 peut recevoir de l'énergie électrique et la stocker, ou peut fournir de l'énergie électrique au module de traction électrique (charge 18). L'unité de gestion de la puissance électrique 14 régule la circulation de puissance en fonction des commandes du conducteur du véhicule et en fonction de l'état du système de fourniture d'électricité.

En outre, afin de pouvoir dans toutes les circonstances prélever le courant de maintien nécessaire au processus d'extinction de la pile à combustible, une résistance 19 associée à un variateur électronique est branchée directement aux bornes de la pile à combustible, c'est-à-dire en amont de l'interrupteur 10A.

La pile à combustible 1 est pilotée par une unité de contrôle 15. Cette unité de contrôle 15 reçoit l'information des capteurs de pression absolue dans le circuit d'hydrogène (capteur 111), dans le circuit d'oxygène (capteur 121), d'un dispositif de mesure de la tension 13 existant sur la ligne électrique de puissance 10, d'un organe de déclenchement 16 (par exemple une clef de contact) de la procédure d'arrêt et l'unité de contrôle 15 pilote le fonctionnement des différentes vannes (110, 120, 122).

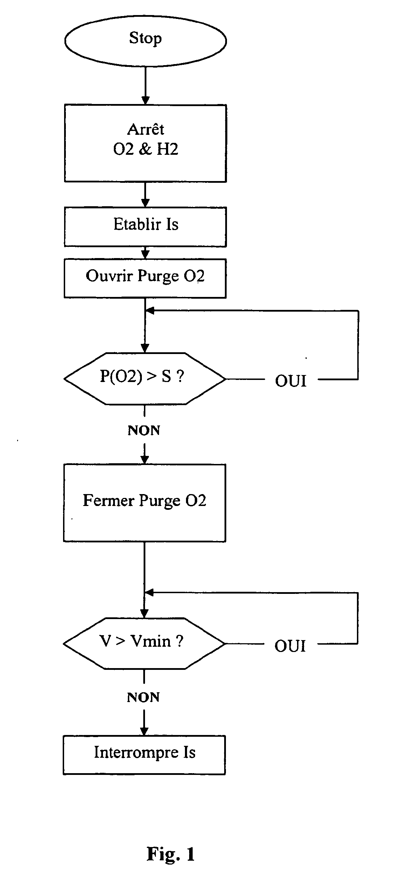

La figure 1 illustre la séquence des opérations proposées pour provoquer un arrêt bien maîtrisé de la pile à combustible 1. Le conducteur, via une clef ou un interrupteur, ou un système de sécurité quelconque assurant la surveillance du véhicule, envoie à l'unité de contrôle 15 un signal demandant l'arrêt de la pile à combustible. A la réception du signal d'arrêt, l'étape initiale provoque la fermeture des vannes d'alimentation en oxygène et hydrogène. A cette fin, l'unité de contrôle 15 de la pile à combustible 1 envoie un signal électrique de fermeture de la vanne 120 d'alimentation en oxygène et de la vanne 110 d'alimentation en hydrogène. La figure 1 illustre un pilotage particulier de l'arrêt d'une pile à combustible alimentée en oxygène pur, conforme à l'invention, l'action « arrêt O₂ et H₂ » représentant cette étape initiale.

L'unité de contrôle 15 de la pile à combustible 1 contrôle l'établissement d'un courant Is faible mais suffisant pour consommer le gaz restant dans les canaux de la pile, ce qui est représenté par le bloc « Etablir Is » à la figure 1. Comme il est possible que la charge 18 et le banc de super-condensateurs 17 ne soient pas en mesure d'absorber un courant, l'unité de contrôle 15 pilote le contacteur électronique de la résistance 19 afin d'être certain que le courant Is requis par le processus d'extinction peut toujours être absorbé. Eventuellement, le courant Is peut être ajusté en fonction de l'état de la pile (température, distribution de tension entre toutes les cellules, ...). On décrira plus loin l'utilisation de ce courant Is.

La pression va tendre vers la pression de vapeur d'eau dépendant de la température. Moyennant des mesures constructives appropriées, comme l'utilisation de plaques bipolaires métalliques, l'étanchéité d'une pile à combustible est excellente et il est possible d'atteindre des niveaux de pression de l'ordre de 200 mbar à 60°C, soit 50 mbar à 30°C.

Afin de garantir un léger excèdent d'hydrogène en fin de procédure d'extinction, l'unité de contrôle 15 de la pile à combustible commande l'ouverture de la vanne de purge 02, représentée par l'action « Ouvrir purge 02 ». Lorsque la pression dans le circuit cathode atteint un niveau S, déterminé afin de garantir que la consommation totale de l'oxygène intervienne avant celle de l'hydrogène, l'unité de contrôle 15 provoque la fermeture de la vanne de purge 02, représenté par l'action « Fermer purge 02 ».

Enfin, lorsque la tension V aux bornes de la pile à combustible est inférieure audit seuil Vₘᵢₙ, l'unité de contrôle 15 de la pile à combustible 1 procède à l'exécution de l'étape finale : le courant délivré prélevé sur la pile est interrompu. En effet, lorsque la tension de la pile est descendue à un niveau suffisamment faible, la pile peut être considérée comme arrêtée.

De préférence, des résistances (non représentées, par exemple de 50 Ohm) sont connectées de façon permanente sur chaque cellule ou groupe de deux ou trois cellules de la pile à combustible afin de consommer à coup sûr les éventuels résidus de gaz et éviter une remontée de la tension après l'extinction.

Un autre avantage de la procédure d'arrêt proposée par l'invention est que la pile à combustible à l'arrêt est dans une configuration propice à un démarrage rapide.

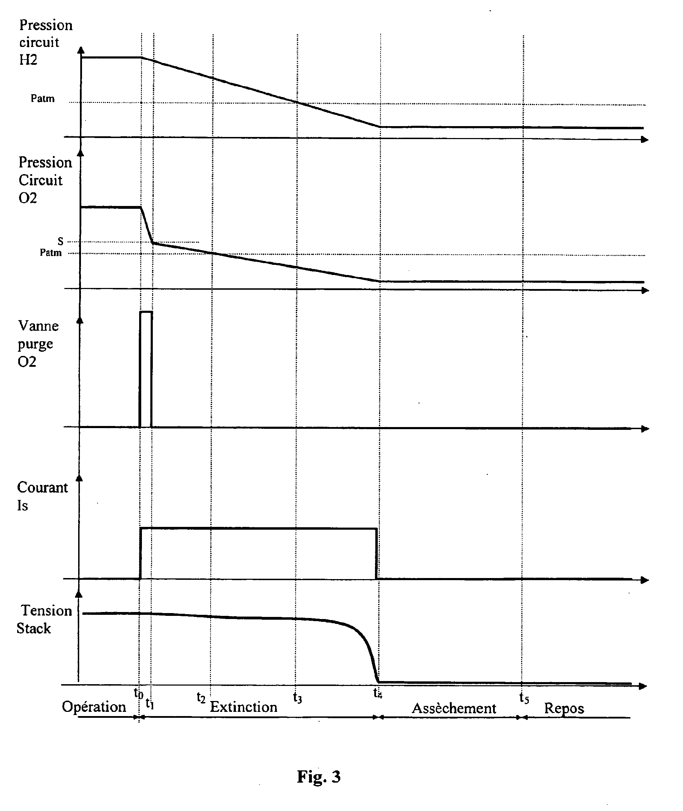

Les courbes de la figure 3 illustrent l'évolution de quelques paramètres pendant l'extinction de la pile à combustible 1 selon cette procédure. L'ordre de départ du processus d'arrêt intervient en t0 (étape initiale). Les deux premières courbes illustrent respectivement l'évolution de la pression dans le circuit anodique et dans le circuit cathodique. La quatrième courbe indique qu'un courant de valeur Is est prélevé sur la pile à partir de cet instant et persiste jusqu'à t4 (étape finale), au moment où la procédure d'extinction est terminée. Au moment t0, la troisième courbe indique que la vanne de purge du circuit cathodique est ouverte jusqu'à ce que la pression du circuit cathodique, deuxième courbe, atteigne le seuil S au moment t1. A partir de t1, les deux circuits sont fermés et la diminution de la pression des gaz est uniquement liée au fait qu'un courant électrique continue à être absorbé.

Si le volume du circuit anodique et celui du circuit cathodique sont identiques, compte tenu de la relation stoechiométrique, la consommation de gaz est environ deux fois plus importante coté hydrogène. La pression d'oxygène (deuxième courbe donnant P(O₂) devient inférieure à la pression atmosphérique à l'instant t2. La pression d'hydrogène (première courbe donnant P(H₂)) devient inférieure à la pression atmosphérique à l'instant t3.

Le seuil S définissant la pression résiduel dans le circuit cathodique après la purge (instant tl) est défini pour que l'oxygène soit complètement consommé avant l'hydrogène afin d'éviter les conditions de prélèvement de courant simultanément à une sous alimentation en hydrogène provoquant la corrosion du carbone utilisé comme support pour le catalyseur associé aux membranes polymères. A l'instant t4, l'oxygène est complètement consommé, la pression résiduelle dans le circuit cathodique correspond à la pression de vapeur d'eau. La tension présente sur la pile à combustible (cinquième courbe donnant la tension de la pile à combustible) est alors proche de zéro, la pile est considérée éteinte. Il s'ensuit une phase d'assèchement, entre les moments t4 et t5, pendant laquelle l'eau présente sous forme de vapeur dans le circuit cathodique peut facilement être évacuée en actionnant par exemple la pompe de recirculation afin de favoriser la condensation de la vapeur d'eau dans le séparateur d'eau présent sur la ligne de recirculation.

Au besoin, de préférence, afin que le véhicule soit mis à l'arrêt avec une réserve d'énergie électrique maximale dans le banc de super-condensateurs, à la suite d'une activation de l'organe d'arrêt et avant de procéder à la fermeture des vannes d'alimentation en oxygène et en hydrogène, on opère un contrôle du niveau de charge du dispositif de stockage d'énergie électrique et, tant que celui-ci est inférieur à un seuil haut, on maintient la pile en opération et on fait basculer l'unité de gestion de l'énergie dans un mode de recharge du dispositif de stockage d'énergie électrique, puis lorsque le niveau de charge est supérieur ou égal audit seuil haut, on opère la fermeture des vannes d'alimentation en oxygène et en hydrogène. Ceci est très utile au redémarrage ultérieur du véhicule.

## Revendications

1. Procédure d'arrêt d'un système de fourniture d'électricité comportant une pile à combustible (1), la pile étant alimentée en oxygène pur comme comburant et délivrant une tension électrique sur une ligne électrique de puissance (10), le système comportant :
- un circuit de gaz carburant (11) côté anodes ;
- un circuit d'oxygène (12) pur côté cathodes ;
la procédure d'arrêt comprenant les étapes suivantes :
• une étape initiale pendant laquelle l'alimentation en gaz oxygène est interrompue,
• une phase de consommation électrique pendant laquelle un courant de maintien est prélevé à la pile à combustible, jusqu'à ce que la pression dans le circuit d'oxygène atteigne la pression de vapeur d'eau.

2. Procédure d'arrêt selon la revendication 1, dans laquelle l'interruption de l'alimentation en gaz carburant est différée par rapport à l'interruption de l'alimentation en oxygène de manière à garantir que la consommation totale d'oxygène intervienne avant celle du gaz carburant.

3. Procédure d'arrêt selon la revendication 1, dans laquelle l'alimentation en oxygène pur et en gaz carburant sont interrompues simultanément.

4. Procédure d'arrêt selon la revendication 3, pour un système dans lequel le circuit d' oxygène (12) pur côté cathodes comporte des moyens permettant la mise à l'atmosphère dudit circuit d'oxygène, procédure dans laquelle, au début de la phase de consommation électrique, le circuit d'oxygène est mis en communication avec l'atmosphère ou avec un gaz neutre, jusqu'à ce que la pression dans le circuit d'oxygène tombe à une pression prédéterminée S supérieure à la pression atmosphérique garantissant que la consommation totale d'oxygène intervienne avant celle du gaz carburant.

5. Procédure d'arrêt selon l'une des revendications 1 à 4, pour un système dans lequel la pile à combustible utilise comme électrolyte une membrane polymère.

6. Procédure d'arrêt selon l'une des revendications 1 à 5, pour un système installé dans un véhicule.

## Claims

1. Shut-down procedure for an electricity delivery system comprising a fuel cell (1), the cell being fed with pure oxygen as oxidant and delivering an electrical voltage to an electrical power line (10), the system comprising:
- a fuel gas circuit (11) on the anode side; and
- a pure oxygen circuit (12) on the cathode side,
and the shut-down procedure comprising the following steps:
an initial step during which the oxygen gas feed is interrupted; and
an electrical consumption phase during which a hold current is drawn from the fuel cell until the pressure in the oxygen circuit reaches the water vapour pressure.

2. Shut-down procedure according to Claim 1, in which the interruption of the fuel gas feed is delayed relative to the interrupting of the oxygen feed so as to guarantee that all the oxygen is consumed before the fuel gas.

3. Shut-down procedure according to Claim 1, in which the pure oxygen and fuel gas feeds are interrupted simultaneously.

4. Shut-down procedure according to Claim 3, for a system in which the pure oxygen circuit (12) on the cathode side includes means for venting said oxygen circuit to atmosphere, in which procedure, at the start of the electrical consumption phase, the oxygen circuit is brought into communication with the atmosphere or with an inert gas, until the pressure in the oxygen circuit drops to a predetermined pressure S above atmospheric pressure, guaranteeing that all the oxygen is consumed before the fuel gas.

5. Shut-down procedure according to one of Claims 1 to 4, for a system in which the fuel cell uses a polymer membrane as electrolyte.

6. Shut-down procedure according to one of Claims 1 to 5, for a system installed in a vehicle.

## Patentansprüche

1. Verfahren zum Abschalten eines Systems zum Bereitstellen von Elektrizität, das eine Brennstoffzelle (1) umfasst, wobei die Zelle mit Reinsauerstoff als Oxidationsmittel gespeist wird und eine elektrische Spannung auf eine Stromkraftleitung (10) liefert, wobei das System Folgendes umfasst:
- anodenseitig einen Brenngaskreislauf (11);
- kathodenseitig einen Reinsauerstoffkreislauf (12);
wobei das Verfahren zum Abschalten die folgenden Schritte umfasst:
- einen ersten Schritt, in dessen Verlauf die Sauerstoffgaszufuhr unterbrochen wird,
- eine Phase des Stromverbrauchs, in deren Verlauf ein Haltestrom aus der Brennstoffzelle entnommen wird, bis der Druck in dem Sauerstoffkreislauf den Druck von Wasserdampf erreicht.

2. Verfahren zum Abschalten nach Anspruch 1, wobei das Unterbrechen der Brenngaszufuhr bezogen auf das Unterbrechen der Sauerstoffzufuhr verzögert wird, um zu garantieren, dass der gesamte Sauerstoff vor dem Brenngas aufgebraucht ist.

3. Verfahren zum Abschalten nach Anspruch 1, wobei die Reinsauerstoffzufuhr und die Brenngaszufuhr gleichzeitig unterbrochen werden.

4. Verfahren zum Abschalten nach Anspruch 3 für ein System, in dem der Reinsauerstoffkreislauf (12) kathodenseitig Mittel umfasst, die das Belüften des Sauerstoffkreislaufs ermöglichen, bei dem am Beginn der Phase des Stromverbrauchs der Sauerstoffkreislauf mit der Atmosphäre oder mit einem Neutralgas in Kommunikation gebracht wird, bis der Druck in dem Sauerstoffkreislauf auf einen vorbestimmten Druck S fällt, der größer ist als der Atmosphärendruck, wodurch garantiert wird, dass der gesamte Sauerstoff vor dem Brenngas aufgebraucht wird.

5. Verfahren zum Abschalten nach einem der Ansprüche 1 bis 4 für ein System, in dem die Brennstoffzelle eine Polymermembran als Elektrolyt verwendet.

6. Verfahren zum Abschalten nach einem der Ansprüche 1 bis 5 für ein System, das in einem Fahrzeug installiert ist.
